# EUROPEAN PATENT SPECIFICATION

(11) **EP 3 849 832 B1**
(45) Date of publication and mention of the grant of the patent: **04.01.2023**
(21) Application number: 19773270.4
(22) Date of filing: 06.09.2019
(51) Int. Cl.: B60H 1/00, B60H 1/32

(54) **TRANSPORTATION REFRIGERATION DEVICE, POWER MANAGEMENT SYSTEM AND POWER MANAGEMENT METHOD**
TRANSPORTKÜHLVORRICHTUNG, LEISTUNGSVERWALTUNGSSYSTEM UND LEISTUNGSVERWALTUNGSVERFAHREN
DISPOSITIF DE RÉFRIGÉRATION DE TRANSPORT, SYSTÈME DE GESTION DE PUISSANCE ET PROCÉDÉ DE GESTION DE PUISSANCE

(30) Priority: 14.09.2018 CN 201811073683
(43) Date of publication of application: 21.07.2021
(73) Proprietor: Carrier Corporation, Palm Beach Gardens, FL 33418 (US)
(72) Inventor: CAI, Siwei, Shanghai 201206 (CN); CHEN, Linhui, Shanghai 201206 (CN); XIE, KangShan, Shanghai 201206 (CN)
(74) Representative: Dehns
(86) International application number: PCT/US2019/049961
(87) International publication number: WO 2020/055689

(56) References cited:
- US-A1- 2005 035 657

## Description

### FIELD OF THE INVENTION

The present invention relates to the field of transport refrigeration, and in particular, to a power management system and a power management method for a transport refrigeration device.

### BACKGROUND OF THE INVENTION

A transport refrigeration device typically includes: a diesel engine serving as a power source, an open compressor, a condenser, an evaporator, an electronic expansion valve, a compressor suction pressure regulating valve, a generator, a battery, and other auxiliary components. The diesel engine provides power for the entire transport refrigeration device. The power is supplied to two components. Specifically, a part of the power is supplied to the compressor to generate a mechanical energy for compressing a refrigerant in a refrigeration circuit, and another part of the power is supplied to the generator to generate an electrical energy for supplying electrical power for electrically driven components in the battery and in the refrigeration circuit, such as a condenser fan, an evaporator fan, a solenoid valve, and a controller. In a start-up stage of the diesel engine, the battery is used as a power supply, and in a normal state, it is used as an electrical load.

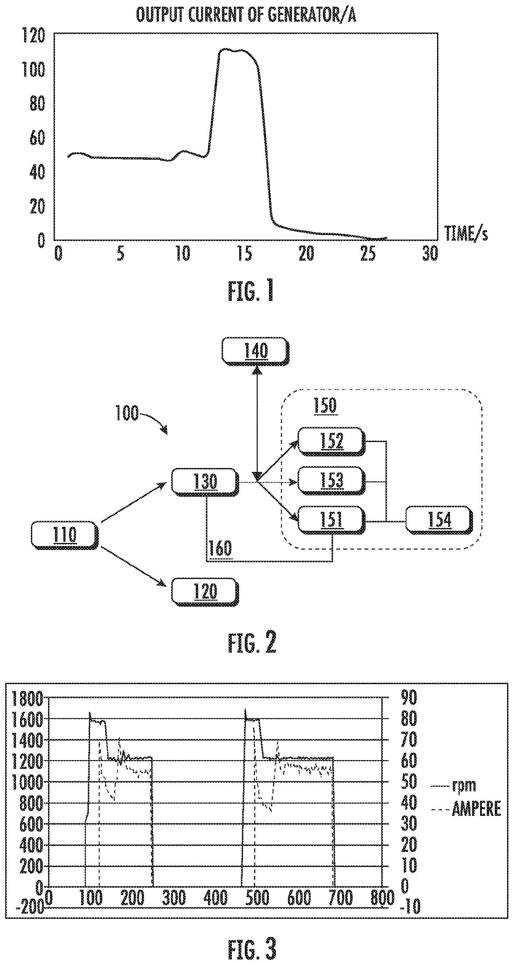

For such transport refrigeration devices driven by a diesel engine, an output power of the generator is typically determined by an actual electrical load, which can lead to potential risks. For example, in a case that a transport vehicle and the transport refrigeration device share the common battery for power supplying, if the transport vehicle is started during the operation of the transport refrigeration device, it will cause a huge load on the generator, which will result in unstable operation of the transport refrigeration device, or even shut down of the diesel engine. FIG. 1 shows one of the aforementioned situations. As can be seen from the drawing, in a phase from the zero second to the 12th second, the transport refrigeration device operates normally, and the output of the generator is stabilized at about 50 amps. Subsequently, the engine of the transport vehicle is started, and a large amount of electrical energy needs to be taken from the battery. However, the electrical energy of the battery is taken from the generator, so the output of the generator is suddenly increased to 110 amps. Since the output current of the components used here is limited to 100 amps, the generator and the diesel engine that drives it are overloaded and shut down.

US 2005/035657 A1 discloses a power management method for a transport refrigeration device as set out in the pre-characterising portion of claim 1.

### SUMMARY OF THE INVENTION

The present invention aims to provide a power management method for a transport refrigeration device with improved performance.

The present invention also aims to provide a power management system for a transport refrigeration device with improved performance.

The present invention further aims to provide a transport refrigeration device with improved performance.

In order to achieve the objects of the present invention, according to an aspect of the present invention, a power management method for a transport refrigeration device is provided, wherein the transport refrigeration device includes a power source, a compressor and a generator both driven by the power source, a refrigerant in a refrigeration circuit which is compressed by the compressor, a battery powered by the generator, an electrically driven component in the refrigeration circuit which is powered by the generator and/or the battery, and a control module, and wherein the power management method includes: adjusting an output power of the power source and/or an input power of the compressor and/or charge and discharge statuses of the battery, by limiting an upper limit and/or a lower limit of an output power of the generator through the control module. In this method the control module is communicatively coupled to the generator and the electrically driven component via a LIN bus.

Optionally, a start-up mode is included, wherein in the start-up mode, during the start-up of the power source, the control module limits the upper limit of the output power of the generator to a first upper limit threshold; after a rotational speed of the power source reaches a first start-up threshold, the control module releases the limiting of the upper limit of the output power of the generator to the first upper limit threshold; and wherein in the start-up mode, the battery supplies power to the electrically driven component in the refrigeration circuit.

Optionally, the first upper limit threshold is 0, and the first start-up threshold is 1000rpm.

Optionally, a normal mode is included, wherein in the normal mode, during the operation of the transport refrigeration device, the control module limits the upper limit of the output power of the generator to a second upper limit threshold, and limits the lower limit of the output power to a first lower limit threshold, so that the transport refrigeration device will not be overloaded.

Optionally, the second upper limit threshold is less than an overload power of the generator; and/or the first lower limit threshold is not less than a sum of a power required for operation of the electrically driven component in the refrigeration circuit and a preset charging power of the battery.

Optionally, a compressor high output capacity mode is included, wherein in the compressor high output capacity mode, the control module limits the upper limit of the output power of the generator to a third upper limit threshold, thereby increasing an output power supplied by the power source to the compressor; and wherein in the compressor high output capacity mode, the battery supplies power to the electrically driven component in the refrigeration circuit.

Optionally, the control module sets and/or adjusts the third upper limit threshold based on a required input power of the compressor.

In a case that the electrically driven component in the refrigeration circuit includes a compressor suction pressure regulating valve, the control module increases an opening degree of the compressor suction pressure regulating valve such that the output power of the compressor increases.

Optionally, an energy-saving mode is included, wherein in the energy-saving mode, the control module limits the upper limit of the output power of the generator to a fourth upper limit threshold; and/or in a case that the electrically driven component in the refrigeration circuit includes a compressor suction pressure regulating valve, the control module reduces an opening degree of the compressor suction pressure regulating valve such that the output power of the compressor decreases.

Optionally, the energy-saving mode is activated when a fuel reserve of the power source is lower than a fuel lower limit threshold.

In a case that the transport refrigeration device further includes a voltage sensor coupled to the battery, the power management method further includes a battery forced-charging mode, wherein in the battery forced-charging mode, when the voltage sensor senses that a voltage of the battery is lower than a voltage lower limit threshold, the control module limits the lower limit of the output power of the generator to a second lower limit threshold such that a portion of the output power of the generator is supplied to charge the battery.

Optionally, the second lower limit threshold is not less than a sum of a power required for operation of the electrically driven component in the refrigeration circuit and a preset charging power of the battery.

Optionally, a power source high-efficiency mode is included, wherein in the power source high-efficiency mode, a setting interval for high output power of the power source is acquired; when a required compressor input power and a generator input power are lower than a lower limit of the setting interval for high output power , the control module controls the power source to operate within the setting interval for high output power and charge the battery; and/or when the required compressor input power and the generator input power are higher than an upper limit of the setting interval for high output power , the control module controls the power source to operate within the setting interval for high output power, and uses the battery to supplement power to the electrically driven component in the refrigeration circuit.

In order to achieve the objects of the present invention, according to another aspect of the present invention, a power management system for a transport refrigeration device is further provided, which is used for implementing the power management method as described above, the power management system including: a power source, which is configured to provide power; a compressor coupled to the power source and driven by the power source to compress a refrigerant in a refrigeration circuit; a generator coupled to the power source and driven by the power source to supply power to an electrically driven component in the refrigeration circuit; a battery coupled to the generator and configured to extract an electrical energy from the generator for charging, and to supply power to the electrically driven component in the refrigeration circuit; and a control module configured to adjust an output power of the power source and/or an input power of the compressor and/or charge and discharge statuses of the battery, by limiting an upper limit and/or a lower limit of an output power of the generator. The control module is communicatively coupled to the generator and the electrically driven component via a LIN bus.

Optionally, the electrically driven component includes one or more of a condenser fan, an evaporator fan, a compressor suction pressure regulating valve, and the control module.

Optionally, a voltage sensor is further included, which is coupled to the battery and configured to sense a voltage of the battery; and the control module controls the battery to charge and/or discharge, based on data sensed by the voltage sensor.

Optionally, the battery is also coupled to the electrically driven component of a transport vehicle of the transport refrigeration device.

Optionally, the power source drives the compressor and/or the generator via a belt and/or a transmission shaft.

In order to achieve the objects of the present invention, according to another aspect of the present invention, a transport refrigeration device is further provided, which includes the power management system as described above.

According to the transport refrigeration device, the power management system and the power management method thereof provided by the present invention, an output power of the power source and/or an input power of the compressor and/or charge and discharge statuses of the battery are adjusted by limiting an upper limit and/or a lower limit of an output power of the generator, so that a stable or efficient operation of each component can be realized in different modes or under different working conditions, thus improving the performance of the entire system.

### BRIEF DESCRIPTION OF THE DRAWINGS

FIG. 1 is a graph showing a parameter variation of a generator of transport refrigeration device in the prior art under an overload condition;
FIG. 2 is a schematic diagram of an embodiment of a power management system for a transport refrigeration device according to the present invention ;
FIG. 3 is a graph showing a parameter variation of an embodiment of a transport refrigeration device according to the present invention in a start-up mode;
FIG. 4 is a graph showing a parameter variation of an embodiment of a transport refrigeration device according to the present invention in a normal mode; and
FIG. 5 is a graph showing a parameter variation of an embodiment of a transport refrigeration device according to the present invention in a power source high-efficiency mode.

### DETAILED DESCRIPTION OF THE EMBODIMENT(S) OF THE INVENTION

The present invention herein provides an embodiment of a power management system for a transport refrigeration device in connection with the drawings. Referring to FIG. 2, the power management system 100 includes a power source 110, a compressor 120, a generator 130, a battery 140, and a control module 151. The power source 110 is configured to provide power; the compressor 120 coupled to the power source 110 is driven by the power source 110 to compress a refrigerant in a refrigeration circuit; the generator 130 coupled to the power source 110 is driven by the power source 110 to supply power to an electrically driven component 150 in the refrigeration circuit; the battery 140 coupled to the generator 130 is configured to extract an electrical energy from the generator 130 for charging, and to supply power to the electrically driven component 150 in the refrigeration circuit; and the control module 151 is configured to adjust an output power of the power source 110 and/or an input power of the compressor 120 and/or charge and discharge statuses of the battery 140, by limiting an upper limit and/or a lower limit of an output power of the generator 130. Through such an arrangement, the power management system 100 for a transport refrigeration device can realize a stable or efficient operation of each component in different modes or under different working conditions, thus improving the performance of the entire system.

More specifically, the electrically driven component 150 mentioned in the foregoing embodiment may include one or more of a condenser fan 152, an evaporator fan 153, a compressor suction pressure regulating valve 154, or the control module 151. These electrically driven components 150 may require constant input power, and may also require variable input power. For example, these fans can use gears of different wind speeds at different input powers.

In addition, the system may also include a voltage sensor coupled to the battery 140 and configured to sense a voltage of the battery 140; and the control module 151 controls the battery 140 to charge and/or discharge, based on data sensed by the voltage sensor. This ensures that the battery can be in a stable voltage range and can perform charging and discharging operations as needed at any time. Furthermore, the battery 140 is also coupled to the electrically driven component 150 of a transport vehicle of the transport refrigeration device so that electrical energy can also be shared with the transport vehicle under certain circumstances.

According to the invention, the control module 151 is communicatively coupled to the generator 130 and the electrically driven component 150 via a LIN bus 160, thereby enabling communication among a plurality of components and control thereof.

Additionally, as a mature technical means in the art, the power source 110 can drive the compressor 120 and the generator 130 via one or more of a belt and a transmission shaft.

Although not shown in the drawings, a transport refrigeration device is further provided herein, which includes the power management system 100 according to any of the foregoing embodiments or a combination thereof, and which also has corresponding technical effects.

Furthermore, the present invention further provides a power management method for a transport refrigeration device in connection with the accompanying drawings, wherein the transport refrigeration device for implementing the method should include at least a power source 110, a compressor 120 and a generator 130 both driven by the power source 110, a refrigerant in a refrigeration circuit which is compressed by the compressor 120, a battery 140 powered by the generator 130, an electrically driven component 150 in the refrigeration circuit which is powered by the generator 130 and/or the battery 140, and a control module 151. Specifically, the power management method includes: adjusting an output power of the power source 110 and/or an input power of the compressor 120 and/or charge and discharge statuses of the battery 140, by limiting an upper limit and/or a lower limit of an output power of the generator 130 and/or by adjusting an opening degree of a compressor suction pressure regulating valve through the control module 151. Through such processing, the power management system 100 for a transport refrigeration device can realize a stable or efficient operation of each component in different modes or under different working conditions, thus improving the performance of the entire system.

More specifically, hereinafter, a plurality of operation modes are specifically derived from the control method, thereby achieving performance improvement of different components from different perspectives, such as improving reliability or increasing efficiency thereof.

For example, a start-up mode may be included, wherein in the start-up mode, during the start-up of the power source 100, the control module 151 limits the upper limit of the output power of the generator 130 to the electrically driven component 150 to a first upper limit threshold; after a rotational speed of the power source 110 reaches a first start-up threshold, the control module 151 releases the limiting of the upper limit of the output power of the generator 130 to the first upper limit threshold. At this point, the power source 110 has a lower start-up load so that it can be successfully started more easily. In the process, since the output power of the generator 130 is limited, the battery 140 should be simultaneously controlled to supply power to the electrically driven component 150 in the refrigeration circuit.

More specifically, the first upper limit threshold can be set to zero, at which point the power source 110 will have a lower start-up load and is therefore more likely to be successfully started. The first start-up threshold can also be set to 1000rpm, that is, after this rotational speed is reached, the power source can be considered to have successfully started.

Referring to FIG. 3, the solid lines show the rotational speed of a diesel engine serving as the power source, and the dashed lines show the output current of the generator. As can be seen from the drawings, in the initial stage of the start-up of the diesel engine, the output current of the generator is limited to 0 amp, so that the diesel engine can be started smoothly with a small load until the rotational speed exceeds 1000 rpm, and then the limiting of the output current of the generator is released so that the generator can start working normally.

For another example, the power management method may further include a normal mode, wherein in the normal mode, during the operation of the transport refrigeration device, the control module 151 limits the upper limit of the output power of the generator 130 to a second upper limit threshold, and limits the lower limit of the output power to a first lower limit threshold. More specifically, the second upper limit threshold is less than an overload power of the generator 130, and the first lower limit threshold is not less than a sum of a power required for operation of the electrically driven component 150 in the refrigeration circuit and a preset charging power of the battery 140. At this point, on the one hand, the lowest output power provided by the generator 130 can ensure that the electrically driven components 150 in the refrigeration circuit can operate normally, and it is also possible to ensure that the battery 140 can obtain a part of the charging capacity; on the other hand, the highest output power provided by the generator 130 is lower than the overload condition of the diesel engine, so even if a special condition occurs in which the transport vehicle borrows electricity from the battery, the overload problem will not be caused.

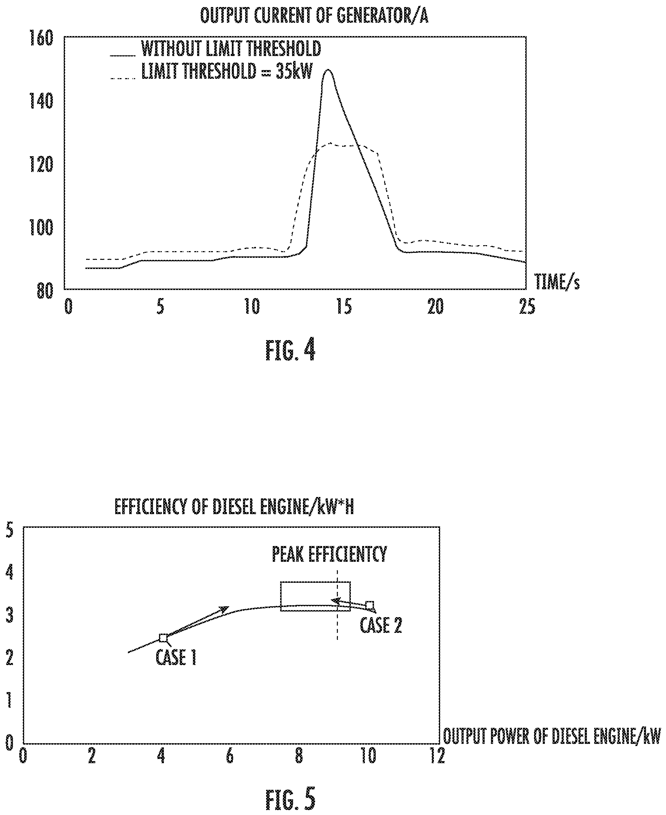

Referring to FIG. 4, the solid lines show a situation where the output current of the generator is not limited, and the dashed line show a situation where the output current of the generator is limited. As can be seen from the drawings, in a case that the output current of the generator is not limited, when the transport vehicle is "borrowing" electricity form the battery, the output current of the generator is increased to 148 amps, and since the output current of the component used is limited to 160 amps, no overload occurs for this time. However, it is very close to the limit of the output current, either a slight increase in the amount of borrowed electricity or a slight decrease in the limit of the output current of the component used may cause overload. In a case that the output current of the generator is limited, although the transport vehicle also borrows electricity from the battery, when the limited output current of 125.7 amps (corresponding to an output power of 35kW) is reached, the generator is limited to this output state and a further increase is impossible, so the possibility of overload is also avoided.

For another example, the power management method may further include a compressor high output capacity mode, wherein in the compressor high output capacity mode, the control module 151 limits the upper limit of the output power of the generator 130 to a third upper limit threshold, thereby increasing an output power supplied by the power source 110 to the compressor 120; and wherein in the compressor high output capacity mode, the battery 140 supplies power to the electrically driven component 150 in the refrigeration circuit. At this point, since the total output power of the diesel engine is constant, and the upper limit of the output power of the generator 130 is limited, the remaining portion of the total output power of the diesel engine can be supplied to the compressor, and with the increase of an opening degree of the compressor suction pressure regulating valve, the output capacity of the compressor can be improved as much as possible. More specifically, based on a required input power of the compressor 120, the control module 151 can set or adjust a third upper limit threshold output by the generator 130, and can even set the third upper limit threshold to 0, thereby ensuring that the output capacity of the compressor can meet requirements.

Referring to the table below, it can be seen that at a working condition of 30/30°C (30°C in the conditioned space and 30°C in the external ambient) and when the system is in the normal mode, the generator will provide an output current of 75 amps, thus meeting the requirements of supplying power to the electrically driven components in the refrigeration circuit and the battery. Moreover, at this point, the compressor outputs a power of 5,122 watts, and finally outputs a refrigeration capacity of 9,419 watts. On the basis of this reference, the output current of the generator is continuously reduced at different gears in the high output capacity mode, and accordingly, the output power of the compressor is also continuously increased, thereby improving the refrigeration capacity of the refrigeration circuit. For example, in a compressor high output capacity mode A, the output current of the generator is about 80% of the reference, and the refrigeration capacity is increased by about 7% compared with the reference; since the battery usually occupies 20 amps of current for charging, the battery in the mode A is substantially in a state of neither charging nor discharging. In a compressor high output capacity mode B, the output current of the generator is about 60% of the reference, and the refrigeration capacity is increased by about 14% compared with the reference; in a compressor high output capacity mode C, the output current of the generator is about 40% of the reference, and the refrigeration capacity is increased by about 21% compared with the reference; in a compressor high output capacity mode D, the output current of the generator is about 20% of the reference, and the refrigeration capacity is increased by about 28% compared with the reference; and in a compressor high output capacity mode E, the output current of the generator is about 0, and the refrigeration capacity is increased by about 35% compared with the reference; at this point, the output power of the power source occupied by the generator is almost zero, that is, the compressor and the driven refrigeration circuit almost achieve the highest refrigeration capacity under the current working condition. It can be seen from the data that in the table, the decrease in the output current of the generator is approximately linear with the increase in the refrigeration capacity.

| Operation mode | Output current of generator/ A | Output power of compressor/W | Suction pressure/barg | Refrigeration capacity/W | Increase of capacity |
|---|---|---|---|---|---|
| Normal mode | 75 | 5122 | 2.23 | 9419 | reference |
| high output capacity mode A | 60 | 5313 | 2.42 | 10078 | 7% |
| high output capacity mode B | 45 | 5505 | 2.63 | 10740 | 14% |
| high output capacity mode C | 30 | 5697 | 2.81 | 11340 | 20% |
| high output capacity mode D | 15 | 5889 | 3.03 | 12076 | 28% |
| high output capacity mode E | 0 | 6080 | 3.24 | 12741 | 35% |

Turning to the table below, it can be seen that at a working condition of 10/30°C (10°C in the conditioned space and 30°C in the external ambient) and when the system is in the normal mode, the generator will provide an output current of 75 amps, thus meeting the requirements of supplying power to the electrically driven components in the refrigeration circuit and the battery. Moreover, at this point, the compressor outputs a power of 4,331 watts, and finally outputs a refrigeration capacity of 6,879 watts. On the basis of this reference, the output current of the generator is continuously reduced at different gears in the high output capacity mode, and accordingly, the output power of the compressor is also continuously increased, thereby improving the refrigeration capacity of the refrigeration circuit. For example, in a compressor high output capacity mode A, the output current of the generator is about 80% of the reference, and the refrigeration capacity is increased by about 8.6% compared with the reference; since the battery usually occupies 20 amps of current for charging, the battery in the mode A is substantially in a state of neither charging nor discharging. In a compressor high output capacity mode B, the output current of the generator is about 60% of the reference, and the refrigeration capacity is increased by about 17.5% compared with the reference; in a compressor high output capacity mode C, the output current of the generator is about 40% of the reference, and the refrigeration capacity is increased by about 26.5% compared with the reference; in a compressor high output capacity mode D, the output current of the generator is about 20% of the reference, and the refrigeration capacity is increased by about 35.7% compared with the reference; and in a compressor high output capacity mode E, the output current of the generator is about 0, and the refrigeration capacity is increased by about 40.2% compared with the reference; at this point, the output power of the power source occupied by the generator is almost zero, that is, the compressor and the driven refrigeration circuit almost achieve the highest refrigeration capacity under the current working condition. It can be seen from the first four sets of data that in the table, the decrease in the output current of the generator is approximately linear with the increase in the refrigeration capacity. However, in the compressor high output capacity mode E, this linear relationship no longer holds. In fact, this is because the refrigeration capacity of the refrigeration circuit is not only limited by the compressor, but is also limited by the compressor suction pressure regulating valve in the circuit; if the compressor suction pressure regulating valve is opened to an opening degree of 100% at some point between mode D and mode E, the refrigeration circuit does not have enough capacity to consume the excessive output power even though the compressor has a higher output power. Therefore, the performance improvement of the high-capacity mode varies slightly in different situations. In summary, it will have better performance improvement effect before the compressor suction pressure regulating valve is adjusted to an opening degree of 100%.

| Operation mode | Output current of generator/ A | Output power of compressor/W | Suction pressure/barg | Refrigeration capacity/W | Increase of capacity |
|---|---|---|---|---|---|
| Normal mode | 75 | 4331 | 1.47 | 6879 | reference |
| high output capacity mode A | 60 | 4522 | 1.65 | 7475 | 8.6% |
| high output capacity mode B | 45 | 4714 | 1.83 | 8087 | 17.5% |
| high output capacity mode C | 30 | 4905 | 2.02 | 8704 | 26.5% |
| high output capacity mode D | 15 | 5097 | 2.21 | 9334 | 35.7% |
| high output capacity mode E | 0 | 5190 | 3.31 | 9643 | 40.2% |

For another example, the power management method may further include an energy-saving mode, wherein in the energy-saving mode, the control module 151 limits the upper limit of the output power of the generator 130 to a fourth upper limit threshold, or even limits it to 0; or in a case that the electrically driven component 150 in the refrigeration circuit includes a compressor suction pressure regulating valve 154, the control module 151 reduces an opening degree of the compressor suction pressure regulating valve 154 such that the output power of the compressor 120 decreases. At this point, by reducing the power consumption of the generator side and/or the compressor side, the diesel engine serving as the power source can be operated for a longer duration with limited fuel. Therefore, the energy-saving mode is typically activated when a fuel reserve of the power source 110 is lower than a fuel lower limit threshold.

Reference is made to the table below, which shows that the operating duration of the power source is increased by adjusting the output power of the generator. As can be seen from the table, as the output current of the generator is reduced, the fuel saving is about 4.2%-18.9%, so that the entire transport refrigeration device has a longer operating duration.

| Operation mode | | Refrigeration capacity/W | Output current of generator/A | Output power of diesel engine/W | Fuel consumption L/hour | Fuel saving | |
|---|---|---|---|---|---|---|---|
| | Normal mode | 7554 | 75 | 7051 | 2.25 | | reference |
| | Mode A | 7554 | 60 | 6685 | 2.16 | | 4.2% |
| | Mode B | 7554 | 45 | 6319 | 2.07 | | 8.2% |
| | Mode C | 7554 | 30 | 5953 | 1.98 | | 12.0% |
| | Mode D | 7554 | 15 | 5587 | 1.90 | | 15.5% |
| | Mode E | 7554 | 0 | 5221 | 1.82 | | 18.9% |

In addition, in a case that the transport refrigeration device further includes a voltage sensor coupled to the battery 140, the power management method may further include a battery forced-charging mode, wherein in the battery forced-charging mode, when the voltage sensor senses that a voltage of the battery 140 is lower than a voltage lower limit threshold, the control module 151 limits the lower limit of the output power of the generator 130 to a second lower limit threshold (for example, the second lower limit threshold is not less than a sum of a power required for operation of the electrically driven component 150 in the refrigeration circuit and a preset charging power of the battery 140) such that a portion of the output power of the generator 130 is supplied to charge the battery 140. This ensures that the voltage of the battery is always within its stable charging and discharging range, thus ensuring the operation stability of the system.

Furthermore, referring to FIG. 5, the power management method may further include a power source high-efficiency mode, wherein in the power source high-efficiency mode, a setting interval for high output power of the power source 110 is acquired, such as the block interval above the curve as shown. As shown in Case 1, when a required compressor 120 input power and a generator 130 input power are lower than a lower limit of the setting interval for high output power, the control module 151 controls the power source 110 to operate within the setting interval for high output power, drive the generator by using the excessive output power, and further charge the battery 140. Alternatively, as shown in Case 2, when the required compressor 120 input power and the generator 130 input power are higher than an upper limit of the setting interval for high output power, the control module 151 controls the power source 110 to operate within the setting interval for high output power , and uses the battery 140 to supplement power to the electrically driven component 150 in the refrigeration circuit. In this mode, through the charging and discharging regulation of the battery 140, the diesel engine serving as the power source is always in a high-efficiency operation state, and the maximum output power can be generated in unit fuel consumption.

It should be understood that the aforementioned operation modes can be used in combination or in an alternative way to achieve different technical effects.

The transport refrigeration device, the power management system and the power management method thereof according to the present invention are mainly described in the above examples. While only some of the embodiments of the present invention have been described, those skilled in the art will understand that the present invention can be carried out in many other forms. Therefore, the illustrated examples and embodiments should be considered as illustrative rather than limiting, and the present invention can cover various modifications and replacements without departing from the scope of the present invention defined by the appended claims.

## Claims

1. A power management method for a transport refrigeration device, wherein the transport refrigeration device comprises a power source (110), a compressor (120) and a generator (130) both driven by the power source (110), a refrigeration circuit comprising the compressor (120) and an electrically driven component (150), a battery (140) powered by the generator (130), and a control module (151), and the electrically driven component (150) is powered by the generator (130) and/or the battery (140), the power management method comprising:
adjusting an output power of the power source (110) and/or an input power of the compressor (120) and/or charge and discharge statuses of the battery (140), by limiting an upper limit and/or a lower limit of an output power of the generator (130) through the control module (151),
**characterised by**:
the control module (151) being communicatively coupled to the generator (130) and the electrically driven component (150) via a LIN bus (160).

2. The power management method according to claim 1, comprising a start-up mode:
during the start-up of the power source (110), the control module (151) limits the upper limit of the output power of the generator (130) to a first upper limit threshold;
after a rotational speed of the power source (110) reaches a first start-up threshold, the control module (151) releases the limiting of the upper limit of the output power of the generator (130) to the first upper limit threshold; and
in the start-up mode, the battery (140) supplies power to the electrically driven component (150) in the refrigeration circuit.

3. The power management method according to claim 2, wherein the first upper limit threshold is 0, and the first start-up threshold is 1000rpm.

4. The power management method according to claim 1, comprising a normal mode:
during the operation of the transport refrigeration device, the control module (151) limits the upper limit of the output power of the generator (130) to a second upper limit threshold, and limits the lower limit of the output power to a first lower limit threshold, so that the transport refrigeration device will not be overloaded,
optionally wherein the second upper limit threshold is less than an overload power of the generator (130); and/or the first lower limit threshold is not less than a sum of a power required for operation of the electrically driven component (150) in the refrigeration circuit and a preset charging power of the battery (140).

5. The power management method according to claim 1, comprising a compressor (120) high output capacity mode: the control module (151) limits the upper limit of the output power of the generator (130) to a third upper limit threshold, thereby increasing an output power supplied by the power source (110) to the compressor (120); and
in the compressor (120) high output capacity mode, the battery (140) supplies power to the electrically driven component (150) in the refrigeration circuit,
optionally wherein the control module (151) sets and/or adjusts the third upper limit threshold based on a required input power of the compressor (120).

6. The power management method according to claim 5, wherein the electrically driven component (150) in the refrigeration circuit comprises a compressor suction pressure regulating valve (154), and the control module (151) increases an opening degree of the compressor suction pressure regulating valve (154) such that the output power of the compressor (120) increases.

7. The power management method according to claim 1, wherein the electrically driven component (150) in the refrigeration circuit comprises a compressor suction pressure regulating valve (154), and the power management method comprises an energy-saving mode:
the control module (151) limits the upper limit of the output power of the generator (130) to a fourth upper limit threshold; and/or
the control module (151) reduces an opening degree of the compressor suction pressure regulating valve (154) such that the output power of the compressor (120) decreases,
optionally wherein the energy-saving mode is activated when a fuel reserve of the power source (110) is lower than a fuel lower limit threshold.

8. The power management method according to claim 1, wherein the transport refrigeration device further comprises a voltage sensor coupled to the battery (140), and the power management method further comprises a battery forced-charging mode:
when the voltage sensor senses that a voltage of the battery (140) is lower than a voltage lower limit threshold, the control module (151) limits the lower limit of the output power of the generator (130) to a second lower limit threshold such that a portion of the output power of the generator (130) is supplied to charge the battery (140),
optionally wherein the second lower limit threshold is not less than a sum of a power required for operation of the electrically driven component (150) in the refrigeration circuit and a preset charging power of the battery (140).

9. The power management method according to claim 1, comprising a power source high-efficiency mode:
a setting interval for high output power of the power source (110) is acquired;
when a required compressor (120) input power and a generator (130) input power are lower than a lower limit of the setting interval for high output power, the control module (151) controls the power source (110) to operate within the setting interval for high output power and charge the battery (140); and/or
when the required compressor (120) input power and the generator (130) input power are higher than an upper limit of the setting interval for high output power, the control module (151) controls the power source (110) to operate within the setting interval for high output power, and uses the battery (140) to supplement power to the electrically driven component (150) in the refrigeration circuit.

10. A power management system (100) for a transport refrigeration device, which is used for implementing the power management method according to any one of claims 1 to 9, the power management system comprising:
a power source (110), which is configured to provide power;
a compressor (120) coupled to the power source (110) and driven by the power source (110) to compress a refrigerant in a refrigeration circuit;
a generator (130) coupled to the power source (110) and driven by the power source (110) to supply power to an electrically driven component (150) in the refrigeration circuit;
a battery (140) coupled to the generator (130) and configured to extract an electrical energy from the generator (130) for charging, and to supply power to the electrically driven component (150) in the refrigeration circuit; and
a control module (151) configured to adjust an output power of the power source (110) and/or an input power of the compressor (120) and/or charge and discharge statuses of the battery (140), by limiting an upper limit and/or a lower limit of an output power of the generator (130),
**characterised by**:
the control module (151) being communicatively coupled to the generator (130) and the electrically driven component (150) via a LIN bus (160).

11. The power management system (100) according to claim 10, wherein the electrically driven component (150) comprises one or more of a condenser fan (152), an evaporator fan (153), a compressor suction pressure regulating valve (154), and the control module (151).

12. The power management system (100) according to claim 10, further comprising a voltage sensor which is coupled to the battery (140) and configured to sense a voltage of the battery (140); and the control module (151) controls the battery (140) to charge and/or discharge, based on data sensed by the voltage sensor.

13. The power management system (100) according to claim 10, wherein the battery (140) is also coupled to the electrically driven component (150) of a transport vehicle of the transport refrigeration device.

14. The power management system (100) according to claim 10, wherein the power source (110) drives the compressor (120) and/or the generator (130) via a belt and/or a transmission shaft.

15. A transport refrigeration device, comprising the power management system (100) according to any one of claims 10 to 14.

## Patentansprüche

1. Leistungsverwaltungsverfahren für eine Transportkühlvorrichtung, wobei die Transportkühlvorrichtung eine Leistungsquelle (110), einen Kompressor (120) und einen Generator (130), die beide von der Leistungsquelle (110) angetrieben werden, einen Kühlkreislauf, der den Kompressor (120) und eine elektrisch betriebene Komponente (150), eine von dem Generator (130) mit Strom versorgte Batterie (140) umfasst, und ein Steuermodul (151) umfasst, und die elektrisch angetriebene Komponente (150) von dem Generator (130) und/oder der Batterie (140) mit Strom versorgt wird, wobei das Leistungsverwaltungsverfahren Folgendes umfasst:
Regulieren einer Ausgangsleistung der Leistungsquelle (110) und/oder einer Eingangsleistung des Kompressors (120) und/oder von Lade- und Entladezuständen der Batterie (140) durch Begrenzen eines oberen Grenzwerts und/oder eines unteren Grenzwerts einer Ausgangsleistung des Generators (130) durch das Steuermodul (151),
**dadurch gekennzeichnet, dass**:
das Steuermodul (151) kommunizierend mit dem Generator (130) und der elektrisch angetriebenen Komponente (150) über einen LIN-Bus (160) gekoppelt ist.

2. Leistungsverwaltungsverfahren nach Anspruch 1, umfassend einen Anlaufmodus:
während des Anlaufs der Leistungsquelle (110) begrenzt das Steuermodul (151) den oberen Grenzwert der Ausgangsleistung des Generators (130) auf einen ersten oberen Grenzwertschwellenwert;
nachdem eine Rotationsgeschwindigkeit der Leistungsquelle (110) einen ersten Anlaufschwellenwert erreicht, hebt das Steuermodul (151) Begrenzen des oberen Grenzwerts der Ausgangsleistung des Generators (130) auf den ersten oberen Grenzwertschwellenwert auf; und
in dem Anlaufmodus gibt die Batterie (140) Leistung an die elektrisch angetriebene Komponente (150) in dem Kühlkreislauf ab.

3. Leistungsverwaltungsverfahren nach Anspruch 2, wobei der erste obere Grenzwertschwellenwert 0 ist, und der erste Anlaufschwellenwert 1000 U/min ist.

4. Leistungsverwaltungsverfahren nach Anspruch 1, umfassend einen normalen Modus:
während des Betriebs der Transportkühlvorrichtung begrenzt das Steuermodul (151) den oberen Grenzwert der Ausgangsleistung des Generators (130) auf einen zweiten oberen Grenzwertschwellenwert und begrenzt den unteren Grenzwert der Ausgangsleistung auf einen ersten unteren Grenzwertschwellenwert, so dass die Transportkühlvorrichtung nicht überlastet wird,
wobei der zweite obere Grenzwertschwellenwert optional geringer ist als eine Überlastungsleistung des Generators (130); und/oder der erste untere Grenzwertschwellenwert nicht geringer ist als eine Summe einer Leistung, die für den Betrieb der elektrisch angetriebenen Komponente (150) in dem Kühlkreislauf erforderlich ist, und einer voreingestellten Ladeleistung der Batterie (140).

5. Leistungsverwaltungsverfahren nach Anspruch 1, umfassend einen Modus mit hoher Ausgabeleistung des Kompressors (120): das Steuermodul (151) begrenzt den oberen Grenzwert der Ausgangsleistung des Generators (130) auf einen dritten oberen Grenzwertschwellenwert und erhöht dadurch eine von der Leistungsquelle (110) an den Kompressor (120) abgegebene Ausgangsleistung; und
in dem Modus mit hoher Ausgabeleistung des Kompressors (120) gibt die Batterie (140) Leistung an die elektrisch angetriebene Komponente (150) in dem Kühlkreislauf ab,
wobei das Steuermodul (151) optional den dritten oberen Grenzwertschwellenwert basierend auf einer erforderlichen Eingangsleistung des Kompressors (120) einstellt und/oder reguliert.

6. Leistungsverwaltungsverfahren nach Anspruch 5, wobei die elektrisch angetriebene Komponente (150) in dem Kühlkreislauf ein Kompressor-Ansaugdruckregelventil (154) umfasst und das Steuermodul (151) einen Öffnungsgrad des Kompressor-Ansaugdruckregelventils (154) so vergrößert, dass die Ausgangsleistung des Kompressors (120) erhöht wird.

7. Leistungsverwaltungsverfahren nach Anspruch 1, wobei die elektrisch angetriebene Komponente (150) in dem Kühlkreislauf ein Kompressor-Ansaugdruckregelventil (154) umfasst und das Leistungsverwaltungsverfahren einen Energiesparmodus umfasst:
das Steuermodul (151) begrenzt den oberen Grenzwert der Ausgangsleistung des Generators (130) auf einen vierten oberen Grenzwertschwellenwert; und/oder
das Steuermodul (151) verringert einen Öffnungsgrad des Kompressor-Ansaugdruckregelventils (154) so, dass die Ausgangsleistung des Kompressors (120) verringert wird,
wobei der Energiesparmodus optional aktiviert wird, wenn eine Kraftstoffreserve der Leistungsquelle (110) niedriger ist als ein untere Kraftstoffgrenzwertschwellenwert.

8. Leistungsverwaltungsverfahren nach Anspruch 1, wobei die Transportkühlvorrichtung weiter einen Spannungssensor umfasst, der mit der Batterie (140) gekoppelt ist, und das Leistungsverwaltungsverfahren weiter einen Batterie-Zwangslademodus umfasst:
wenn der Spannungssensor erkennt, dass eine Spannung der Batterie (140) niedriger ist als ein unterer Spannungsgrenzwertschwellenwert, begrenzt das Steuermodul (151) den unteren Grenzwerts der Ausgangsleistung des Generators (130) auf einen zweiten unteren Grenzwertschwellenwert so, dass ein Teil der Ausgangsleistung des Generators (130) zum Laden der Batterie (140) abgegeben wird,
wobei der zweite untere Grenzwertschwellen optional nicht geringer ist als eine Summe einer Leistung, die für den Betrieb der elektrisch angetriebenen Komponente (150) in dem Kühlkreislauf erforderlich ist, und einer voreingestellten Ladeleistung der Batterie (140).

9. Leistungsverwaltungsverfahren nach Anspruch 1, umfassend a Hocheffizienzmodus der Leistungsquelle:
ein Einstellungsintervall für hohe Ausgangsleistung der Leistungsquelle (110) wird erfasst;
wenn eine erforderliche Eingangsleistung des Kompressors (120) und eine Eingangsleistung des Generators (130) geringer sind als ein unterer Grenzwert des Einstellungsintervalls für hohe Ausgangsleistung, steuert das Steuermodul (151) die Leistungsquelle (110), um mit dem Einstellungsintervall für hohe Ausgangsleistung zu arbeiten und die Batterie (140) zu laden; und/oder
wenn die erforderliche Eingangsleistung des Kompressors (120) und eine Eingangsleistung des Generators (130) höher sind als ein obere Grenzwert des Einstellungsintervalls für hohe Ausgangsleistung, steuert das Steuermodul (151) die Leistungsquelle (110), um mit dem Einstellungsintervall für hohe Ausgangsleistung zu arbeiten, und verwendet die Batterie (140), um Leistung an die elektrisch angetriebene Komponente (150) in dem Kühlkreislauf zu ergänzen.

10. Leistungsverwaltungssystem (100) für eine Transportkühlvorrichtung, das zum Implementieren des Leistungsverwaltungsverfahrens nach einem der Ansprüche 1 bis 9 verwendet wird, wobei das Leistungsverwaltungssystem Folgendes umfasst:
eine Leistungsquelle (110), die konfiguriert ist, um Leistung bereitzustellen;
einen Kompressor (120), der mit der Leistungsquelle (110) gekoppelt ist und von der Leistungsquelle (110) angetrieben wird, um ein Kühlmittel in einem Kühlkreislauf zu komprimieren;
einen Generator (130), der mit der Leistungsquelle (110) gekoppelt ist und von der Leistungsquelle (110) angetrieben wird, um Leistung an eine elektrisch angetriebene Komponente (150) in dem Kühlkreislauf abzugeben;
eine Batterie (140), die mit dem Generator (130) gekoppelt ist und konfiguriert ist, um zum Laden elektrische Energie aus dem Generator (130) zu entnehmen und Leistung an die elektrisch angetriebene Komponente (150) in dem Kühlkreislauf abzugeben; und
ein Steuermodul (151), das konfiguriert ist, um eine Ausgangsleistung der Leistungsquelle (110) und/oder eine Eingangsleistung des Kompressors (120) und/oder Lade- und Entladezustände der Batterie (140) zu regulieren durch Begrenzen eines oberen Grenzwerts und/oder eines unteren Grenzwerts einer Ausgangsleistung des Generators (130),
**dadurch gekennzeichnet, dass**:
das Steuermodul (151) kommunizierend mit dem Generator (130) und der elektrisch angetriebenen Komponente (150) über einen LIN-Bus (160) gekoppelt ist.

11. Leistungsverwaltungssystem (100) nach Anspruch 10, wobei die elektrisch angetriebene Komponente (150) eines oder mehreres von einem Kondensatorlüfter (152), einem Verdampferlüfter (153), einem Kompressor-Ansaugdruckregelventil (154) und das Steuermodul (151) umfasst.

12. Leistungsverwaltungssystem (100) nach Anspruch 10, weiter umfassend einen Spannungssensor, der mit der Batterie (140) gekoppelt ist und konfiguriert ist, um eine Spannung der Batterie (140) zu erkennen; und wobei das Steuermodul (151) die Batterie (140) basierend auf von dem Spannungssensor erkannten Daten zum Laden und/oder Entladen steuert.

13. Leistungsverwaltungssystem (100) nach Anspruch 10, wobei die Batterie (140) auch mit der elektrisch angetriebenen Komponente (150) eines Transportfahrzeugs der Transportkühlvorrichtung gekoppelt ist.

14. Leistungsverwaltungssystem (100) nach Anspruch 10, wobei die Leistungsquelle (110) den Kompressor (120) und/oder den Generator (130) über einen Riemen und/oder eine Transmissionswelle antreibt.

15. Transportkühlvorrichtung, umfassend das Leistungsverwaltungssystem (100) nach einem der Ansprüche 10 bis 14.

## Revendications

1. Procédé de gestion de puissance pour dispositif de réfrigération de transport, dans lequel le dispositif de réfrigération de transport comprend une source d'alimentation (110), un compresseur (120) et un générateur (130) tous deux entraînés par la source d'alimentation (110), un circuit de réfrigération comprenant le compresseur (120) et un composant à entraînement électrique (150), une batterie (140) alimentée par le générateur (130), et un module de commande (151), et le composant à entraînement électrique (150) est alimenté par le générateur (130) et/ou la batterie (140), le procédé de gestion de puissance comprenant les étapes consistant à :
ajuster une puissance de sortie de la source d'alimentation (110) et/ou une puissance d'entrée du compresseur (120) et/ou des états de charge et de décharge de la batterie (140), en limitant une limite supérieure et/ou une limite inférieure d'une puissance de sortie du générateur (130) par l'intermédiaire du module de commande (151),
**caractérisé en ce que** :
le module de commande (151) est couplé en communication avec le générateur (130) et le composant à entraînement électrique (150) par l'intermédiaire d'un bus LIN (160).

2. Procédé de gestion de puissance selon la revendication 1, comprenant un mode de démarrage :
pendant le démarrage de la source d'alimentation (110), le module de commande (151) limite la limite supérieure de la puissance de sortie du générateur (130) à un premier seuil de limite supérieure ;
après qu'une vitesse de rotation de la source d'alimentation (110) a atteint un premier seuil de démarrage, le module de commande (151) libère la limitation de la limite supérieure de la puissance de sortie du générateur (130) au premier seuil de limite supérieure ; et
dans le mode de démarrage, la batterie (140) délivre une puissance au composant à entraînement électrique (150) dans le circuit de réfrigération.

3. Procédé de gestion de puissance selon la revendication 2, dans lequel le premier seuil de limite supérieure est égal à 0 et le premier seuil de démarrage est de 1000 tpm.

4. Procédé de gestion de puissance selon la revendication 1, comprenant un mode normal :
pendant le fonctionnement du dispositif de réfrigération de transport, le module de commande (151) limite la limite supérieure de la puissance de sortie du générateur (130) à un deuxième seuil de limite supérieure et limite la limite inférieure de la puissance de sortie à un premier seuil de limite inférieure, de sorte que le dispositif de réfrigération de transport ne sera pas en surcharge,
éventuellement dans lequel le deuxième seuil de limite supérieure est inférieur à une puissance de surcharge du générateur (130) ; et/ou le premier seuil de limite inférieure n'est pas inférieur à une somme d'une puissance nécessaire au fonctionnement du composant à entraînement électrique (150) dans le circuit de réfrigération et d'une puissance de chargement préréglée de la batterie (140).

5. Procédé de gestion de puissance selon la revendication 1, comprenant un mode à capacité de sortie élevée du compresseur (120) : le module de commande (151) limite la limite supérieure de la puissance de sortie du générateur (130) à un troisième seuil de limite supérieure, ce qui augmente une puissance de sortie délivrée par la source d'alimentation (110) au compresseur (120) ; et
dans le mode à capacité de sortie élevée du compresseur (120), la batterie (140) délivre une puissance au composant à entraînement électrique (150) dans le circuit de réfrigération,
éventuellement dans lequel le module de commande (151) règle et/ou ajuste le troisième seuil de limite supérieure sur la base d'une puissance d'entrée requise du compresseur (120).

6. Procédé de gestion de puissance selon la revendication 5, dans lequel le composant à entraînement électrique (150) dans le circuit de réfrigération comprend une soupape de régulation de pression d'aspiration du compresseur (154), et le module de commande (151) augmente un degré d'ouverture de la soupape de régulation de pression d'aspiration du compresseur (154) de telle sorte que la puissance de sortie du compresseur (120) augmente.

7. Procédé de gestion de puissance selon la revendication 1, dans lequel le composant à entraînement électrique (150) dans le circuit de réfrigération comprend une soupape de régulation de pression d'aspiration du compresseur (154), et le procédé de gestion de puissance comprend un mode d'économie d'énergie :
le module de commande (151) limite la limite supérieure de la puissance de sortie du générateur (130) à un quatrième seuil de limite supérieure ; et/ou
le module de commande (151) réduit un degré d'ouverture de la soupape de régulation de pression d'aspiration du compresseur (154) de telle sorte que la puissance de sortie du compresseur (120) diminue,
éventuellement dans lequel le mode d'économie d'énergie est activé lorsqu'une réserve de carburant de la source d'alimentation (110) est inférieure à un seuil de limite inférieure de carburant.

8. Procédé de gestion de puissance selon la revendication 1, dans lequel le dispositif de réfrigération de transport comprend en outre un détecteur de tension couplé à la batterie (140), et le procédé de gestion de puissance comprend en outre un mode de chargement forcé de la batterie :
lorsque le détecteur de tension détecte qu'une tension de la batterie (140) est inférieure à un seuil de limite inférieure de tension, le module de commande (151) limite la limite inférieure de la puissance de sortie du générateur (130) à un deuxième seuil de limite inférieure, de telle sorte qu'une partie de la puissance de sortie du générateur (130) est délivrée pour charger la batterie (140),
éventuellement dans lequel le deuxième seuil de limite inférieure n'est pas inférieur à une somme d'une puissance nécessaire au fonctionnement du composant à entraînement électrique (150) dans le circuit de réfrigération et d'une puissance de chargement préréglée de la batterie (140).

9. Procédé de gestion de puissance selon la revendication 1, comprenant un mode à haute efficacité de la source d'alimentation :
un intervalle de réglage pour une puissance de sortie élevée de la source d'alimentation (110) est acquis ;
lorsqu'une puissance d'entrée requise du compresseur (120) et une puissance d'entrée du générateur (130) sont inférieures à une limite inférieure de l'intervalle de réglage pour une puissance de sortie élevée, le module de commande (151) commande à la source d'alimentation (110) de fonctionner dans l'intervalle de réglage pour une puissance de sortie élevée et de charger la batterie (140) ; et/ou
lorsque la puissance d'entrée requise du compresseur (120) et la puissance d'entrée du générateur (130) sont supérieures à une limite supérieure de l'intervalle de réglage pour une puissance de sortie élevée, le module de commande (151) commande à la source d'alimentation (110) de fonctionner dans l'intervalle de réglage pour une puissance de sortie élevée et utilise la batterie (140) pour délivrer un appoint de puissance au composant à entraînement électrique (150) dans le circuit de réfrigération.

10. Système de gestion de puissance (100) pour dispositif de réfrigération de transport, qui est utilisé pour mettre en œuvre le procédé de gestion de puissance selon l'une quelconque des revendications 1 à 9, le système de gestion de puissance comprenant :
une source d'alimentation (110), qui est configurée pour fournir une puissance ;
un compresseur (120) couplé à la source d'alimentation (110) et entraîné par la source d'alimentation (110) pour comprimer un fluide frigorigène dans un circuit de réfrigération ;
un générateur (130) couplé à la source d'alimentation (110) et entraîné par la source d'alimentation (110) pour délivrer une puissance à un composant à entraînement électrique (150) dans le circuit de réfrigération ;
une batterie (140) couplée au générateur (130) et configurée pour extraire une énergie électrique à partir du générateur (130) en vue d'un chargement, et pour délivrer une puissance au composant à entraînement électrique (150) dans le circuit de réfrigération ; et
un module de commande (151) configuré pour ajuster une puissance de sortie de la source d'alimentation (110) et/ou une puissance d'entrée du compresseur (120) et/ou des états de charge et de décharge de la batterie (140), en limitant une limite supérieure et/ou une limite inférieure d'une puissance de sortie du générateur (130),
**caractérisé en ce que** :
le module de commande (151) est couplé en communication avec le générateur (130) et le composant à entraînement électrique (150) par l'intermédiaire d'un bus LIN (160).

11. Système de gestion de puissance (100) selon la revendication 10, dans lequel le composant à entraînement électrique (150) comprend un ou plusieurs éléments parmi un ventilateur de condenseur (152), un ventilateur d'évaporateur (153), une soupape de régulation de pression d'aspiration du compresseur (154) et le module de commande (151).

12. Système de gestion de puissance (100) selon la revendication 10, comprenant en outre un détecteur de tension qui est couplé à la batterie (140) et configuré pour détecter une tension de la batterie (140) ; et le module de commande (151) commande la charge et/ou la décharge de la batterie (140) sur la base de données détectées par le détecteur de tension.

13. Système de gestion de puissance (100) selon la revendication 10, dans lequel la batterie (140) est également couplée au composant à entraînement électrique (150) d'un véhicule de transport du dispositif de réfrigération de transport.

14. Système de gestion de puissance (100) selon la revendication 10, dans lequel la source d'alimentation (110) entraîne le compresseur (120) et/ou le générateur (130) par l'intermédiaire d'une courroie et/ou d'un arbre de transmission.

15. Dispositif de réfrigération de transport, comprenant le système de gestion de puissance (100) selon l'une quelconque des revendications 10 à 14.
